# EUROPEAN PATENT SPECIFICATION

(11) **EP 3 306 981 B1**
(45) Date of publication and mention of the grant of the patent: **24.03.2021**
(21) Application number: 15903382.8
(22) Date of filing: 10.09.2015
(51) Int. Cl.: H04W 36/00

(54) **CHANNEL MEASUREMENT AND MEASUREMENT RESULT REPORTING METHOD, AND DEVICE UTILIZING SAME**
KANALMESSUNG UND MESSERGEBNISBERICHTSVERFAHREN SOWIE VORRICHTUNG DAMIT
PROCÉDÉ DE MESURAGE DE CANAL ET DE CRÉATION DE RAPPORT DE RÉSULTAT DE MESURAGE, ET DISPOSITIF L'UTILISANT

(43) Date of publication of application: 11.04.2018
(73) Proprietor: GUANGDONG OPPO MOBILE TELECOMMUNICATIONS CORP., LTD., Wusha, Chang'an Dongguan, Guangdong 523860 (CN)
(72) Inventor: FENG, Bin, Dongguan Guangdong 523860 (CN)
(74) Representative: Manitz Finsterwald Patent- und Rechtsanwaltspartnerschaft mbB
(86) International application number: PCT/CN2015/089393
(87) International publication number: WO 2017/041275

(56) References cited:
- EP-A1- 2 448 312
- CN-A- 101 765 130
- CN-A- 101 790 206
- CN-A- 102 714 837
- US-A1- 2008 304 453
- US-A1- 2011 200 014
- US-A1- 2015 245 235
- CATT: "Measurement in CA", 3GPP DRAFT; R2-100063, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 12 January 2010 (2010-01-12), XP050420911, [retrieved on 2010-01-12]

## Description

### TECHNICAL FIELD

The disclosure relates to communications, and particularly to a channel measurement and measurement result reporting method and device.

### BACKGROUND

In a conventional wireless cellular communication system, a measurement and reporting plays a very important role in handover of a terminal in a connected state, and corresponding measurement may also assist a terminal side in reasonable link reestablishment when a connected-state radio link has a problem. Measured quantities mainly include Reference Signal Receiver Power (RSRP), Reference Signal Received Quality (RSRQ) and a Received Signal Strength Indicator (RSSI). In an idle state, the terminal decides whether to continue camping in a cell or not or whether it is necessary to reselect a neighbor cell of the same frequency or a different frequency or not under a configuration provided by system information based on RSRP and RSRQ measurement results of the camping cell and the neighbor cell. In such a process, the terminal is not required to report the measurement results to a network side. In the connected state, the terminal performs event-triggered or periodical measurement result reporting under a dedicated signaling configuration. A network side entity (such as a base station) performs terminal handover in a mobile state or addition or deletion of a secondary carrier/cell during carrier aggregation/dual connectivity. During connected-state reestablishment, a radio link interruption may be caused due to the problem of the radio link, so that the terminal may enter a cell reestablishment procedure to select a certain cell to try to recover the link as fast as possible. In such a process, the terminal performs RSRP/RSRQ measurement according to a cell selection criterion, but does not report a measurement result to a network. Instead, the terminal autonomously selects the cell for reestablishment. Related technologies are known from US 2011/0200014 A1.

At present, it is considered to configure more carriers, for example, 32, to increase a peak data rate and improve a user experience in a wireless cellular system, wherein a bandwidth of 20MHz is configured to a single carrier, so that a carrier bandwidth of totally 640MHz may be configured to a single user. Compared with conventional single-carrier or Release 10 (R10) carrier aggregation, the bandwidth configured to the single user may be larger, the peak data rate experienced by the user is also higher, and meanwhile, once the user executes handover or reestablishment, data rate loss caused by activation/deactivation of a secondary carrier may also be more significant.

When a conventional manner is adopted, if a terminal is in a connected state, when the terminal performs handover or reestablishment, the terminal reports, a network selects a primary carrier for access, and then the primary carrier adds a corresponding secondary carrier. However, in such a process, the number of carriers serving the terminal may be reduced from at most 32 carriers to 1 or a few carriers. At this moment, a Transmission Control Protocol (TCP) may be slowly started, therefore affecting an experience of the terminal user on part of services.

### SUMMARY

The disclosure provides a channel measurement and measurement result reporting method and device, which may improve a user experience of a terminal in case of handover or reestablishment of terminal equipment in a wireless network supporting carrier aggregation. The present invention is defined in the independent claims.

A first aspect provides a channel measurement and measurement result reporting method performed by terminal equipment. The method includes: receiving configuration information transmitted by a source base station containing a source cell or by a target base station, where the configuration information includes: measurement parameters, a measurement period and a measurement duration, the measurement parameters including a Received Signal Strength Indicator, RSSI; measuring a channel of a carrier according to the configuration information; acquiring a channel measurement result of the carrier according to the configuration information, the carrier being configurable as a secondary carrier of the terminal equipment; and transmitting the channel measurement result to the target base station containing a target cell when a serving cell is changed from the source cell to the target cell, where measuring the channel of the carrier to obtain the channel measurement result of the carrier according to the configuration information include: measuring a measurement parameter in a measurement duration on a carrier frequency indicated in the configuration information according to the measurement period in the configuration information, and recording a measurement result, the measurement duration being configured according to a comparison result of a previous RSSI measurement result with respect to a threshold value.

A second aspect provides a channel measurement and measurement result reporting method performed by a target base station. The method includes: receiving a channel measurement result of a carrier, transmitted by terminal equipment when a serving cell is changed from a source cell to a target cell belonging to the target base station, the carrier being configurable as a secondary carrier of the terminal equipment; and performing communication with the terminal equipment according to the channel measurement result; and transmitting configuration information to the terminal equipment to enable the terminal equipment to measure a channel of the carrier according to the configuration information, where the configuration information includes: measurement parameters, a measurement period and a measurement duration, the measurement parameters including a Received Signal Strength Indicator, RSSI, the measurement duration being configured according to a comparison result of a previous RSSI measurement result with respect to a threshold value.

A third aspect provides a channel measurement and measurement result reporting method performed by a source base station. The method includes: receiving a channel measurement result of a carrier, transmitted by terminal equipment when a serving cell is changed from a source cell belonging to the source base station to a target cell, the carrier being configurable as a secondary carrier of the terminal equipment at a side of a target base station containing the target cell; transmitting the channel measurement result to the target base station; and transmitting configuration information to the terminal equipment to enable the terminal equipment to measure a channel of the carrier according to the configuration information, where the configuration information includes: measurement parameters, a measurement period and a measurement duration, the measurement parameters including a Received Signal Strength Indicator, RSSI, the measurement duration being configured according to a comparison result of a previous RSSI measurement result with respect to a threshold value.

A fourth aspect provides terminal equipment which may be adapted to perform the steps of the channel measurement and measurement result reporting method as described in the first aspect of the invention.

Based on the abovementioned technical characteristics, according to the channel measurement and measurement result reporting method and device provided by embodiments of the disclosure, the terminal equipment in a connected state acquires the channel measurement result of the carrier which may be configurable as the secondary carrier of the terminal equipment, and transmits the channel measurement result to the target base station containing the target cell when the serving cell is changed from the source cell to the target cell. In such a manner, a user experience of a terminal may be improved in case of handover or reestablishment of the terminal equipment in a wireless network supporting carrier aggregation.

### BRIEF DESCRIPTION OF DRAWINGS

In order to describe the technical solutions of the embodiments of the disclosure more clearly, the drawings required to be used for descriptions about the embodiments or a conventional art will be simply introduced below. Apparently, the drawings described below are only some embodiments of the disclosure. For those skilled in the art, other drawings may further be obtained according to these drawings without creative work.
Fig. 1 is a schematic flowchart of a channel measurement and measurement result reporting method according to an embodiment of the disclosure.
Fig. 2 is another schematic flowchart of a channel measurement and measurement result reporting method according to an embodiment of the disclosure.
Fig. 3 is a schematic flowchart of a channel measurement and measurement result reporting method according to yet another embodiment of the disclosure.
Fig. 4 is a schematic flowchart of a channel measurement and measurement result reporting method according to still another embodiment of the disclosure.
Fig. 5 is a schematic flowchart of a channel measurement and measurement result reporting method according to still another embodiment of the disclosure.
Fig. 6 is another schematic flowchart of a channel measurement and measurement result reporting method according to still another embodiment of the disclosure.
Fig. 7 is a schematic flowchart of a channel measurement and measurement result reporting method according to another embodiment of the disclosure.
Fig. 8 is another schematic flowchart of a channel measurement and measurement result reporting method according to another embodiment of the disclosure.
Fig. 9 is yet another schematic flowchart of a channel measurement and measurement result reporting method according to another embodiment of the disclosure.
Fig. 10 is a schematic block diagram of terminal equipment according to an embodiment of the disclosure.
Fig. 11 is a schematic block diagram of terminal equipment according to another embodiment of the disclosure.
Fig. 12 is a schematic block diagram of a base station according to an embodiment of the disclosure.
Fig. 13 is a schematic block diagram of a base station according to another embodiment of the disclosure.
Fig. 14 is a schematic block diagram of a base station according to yet another embodiment of the disclosure.
Fig. 15 is another schematic block diagram of a base station according to still another embodiment of the disclosure.
Fig. 16 is a schematic block diagram of a base station according to still another embodiment of the disclosure.

### DETAILED DESCRIPTION

The technical solutions in the embodiments of the disclosure will be clearly and completely described below in combination with the drawings in the embodiments of the disclosure. Apparently, the described embodiments are not all embodiments but part of embodiments of the disclosure. All other embodiments obtained by those skilled in the art based on the embodiments in the disclosure without creative work fall within the scope of protection of the disclosure.

It should be understood that the technical solutions of the embodiments of the disclosure may be applied to various communication systems, for example, a Global System of Mobile Communication (GSM), a Code Division Multiple Access (CDMA) system, a Wideband Code Division Multiple Access (WCDMA) General Packet Radio Service (GPRS) system, a Long Term Evolution (LTE) system, an LTE Frequency Division Duplex (FDD) system, LTE Time Division Duplex (TDD), a Universal Mobile Telecommunication System (UMTS) and a future 5th-Generation (5G) communication system.

It should be understood that, in the embodiments of the disclosure, terminal equipment may also be called user equipment, a Mobile Station (MS), a mobile terminal and the like. The user equipment may communicate with one or more core networks through a Radio Access Network (RAN). For example, the user equipment may be a mobile phone (or called a "cell" phone) and a computer with a mobile terminal, and for example, may be a portable, pocket, handheld, in-computer or vehicle-mounted mobile device, and terminal equipment in a future 5G network or terminal equipment in a future evolved Public Land Mobile Network (PLMN).

It should also be understood that, in the embodiments of the disclosure, a base station may be a Base Transceiver Station (BTS) in a GSM or CDMA, may also be a NodeB (NB) in a WCDMA system, and may further be an Evolutional Node B (eNB or eNodeB) in an LTE system.

It is noted that, in the embodiments of the disclosure, both the base station and the terminal equipment may support License Assisted Access (LAA) and Wireless Fidelity (WiFi) secondary carrier addition, modification and deletion functions.

In the embodiments of the disclosure, terminal equipment is provided, which includes an acquisition module, configured for the terminal equipment to acquire a channel measurement result of a carrier, the carrier being configurable as a secondary carrier of the terminal equipment; and a transceiver module, configured to transmit the channel measurement result to a target base station containing a target cell when that a serving cell is changed from a source cell to the target cell.

In an example, the acquisition module is further configured to control the transceiver module to receive configuration information transmitted by a source base station containing the source cell or the target base station; and measure a channel of the carrier to obtain the channel measurement result according to the configuration information.

In an example, the acquisition module is specifically configured to control the transceiver module to receive a Radio Resource Control (RRC) reconfiguration message transmitted by the source base station or the target base station, the RRC reconfiguration message including the configuration information; and measure the channel of the carrier to obtain the channel measurement result according to the configuration information.

In an example, the configuration information includes at least one of the following information: a carrier frequency, a measurement report triggering event, measurement parameters, a measurement period and a measurement duration.

In an example, the transceiver module is further configured to transmit measurement time information indicating a measurement time of the channel measurement result to the target base station when the serving cell is changed from the source cell to the target cell.

In an example, the transceiver module is specifically configured to transmit the channel measurement result to the source base station to enable the source base station to transmit the channel measurement result to the target base station.

In an example, the transceiver module is specifically configured to transmit an RRC reconfiguration completion message or an RRC handover completion message to the target base station, the RRC reconfiguration completion message or the RRC handover completion message including the channel measurement result.

In an example, the transceiver module is specifically configured to transmit an RRC reestablishment request message or an RRC reestablishment completion message to the target base station, the RRC reestablishment request message or the RRC reestablishment completion message including the channel measurement result.

In the embodiments of the disclosure, a base station is provided, which includes: a transceiver module, configured to receive a channel measurement result of a carrier, transmitted by terminal equipment when that a serving cell is changed from a source cell to a target cell belonging to the base station, the carrier being configurable as a secondary carrier of the terminal equipment; and a communication module, configured to communicate with the terminal equipment according to the channel measurement result.

In an example, the transceiver module is further configured to transmit configuration information to the terminal equipment to enable the terminal equipment to measure a channel of the carrier to obtain the channel measurement result according to the configuration information.

In an example, the transceiver module is specifically configured to transmit a Radio Resource Control (RRC) reconfiguration message to the terminal equipment, the RRC reconfiguration message comprising the configuration information.

In an example, the configuration information comprises at least one of the following information: a carrier frequency, a measurement report triggering event, measurement parameters, a measurement period and a measurement duration.

In an example, the transceiver module is specifically configured to receive measurement time information indicating a measurement time of the channel measurement result, transmitted by the terminal equipment when the serving cell is changed from the source cell to the target cell belonging to the base station.

In an example, the transceiver module is specifically configured to receive an RRC reconfiguration completion message or RRC handover completion message transmitted by the terminal equipment, the RRC reconfiguration completion message or the RRC handover completion message comprising the channel measurement result.

In an example, the transceiver module is specifically configured to receive an RRC reestablishment request message or RRC reestablishment completion message transmitted by the terminal equipment, the RRC reestablishment request message or the RRC reestablishment completion message including the channel measurement result.

In the embodiments of the disclosure, a base station is provided, which includes: a receiving module, configured to receive a channel measurement result of a carrier, transmitted by terminal equipment when that a serving cell is changed from a source cell belonging to the base station to a target cell, the carrier being configurable as a secondary carrier of the terminal equipment at a side of a target base station containing the target cell; and a transmission module, configured to transmit the channel measurement result to the target base station.

In an example, the transmission module is further configured to transmit configuration information to the terminal equipment to enable the terminal equipment to measure a channel of the carrier to obtain the channel measurement result according to the configuration information.

In an example, the transmission module is specifically configured to transmit a Radio Resource Control (RRC) reconfiguration message to the terminal equipment, the RRC reconfiguration message comprising the configuration information.

In an example, the configuration information comprises at least one of the following information: a carrier frequency, a measurement report triggering event, measurement parameters, a measurement period and a measurement duration.

In an example, a processing module is further included, being configured to acquire measurement time information configured to indicate a measurement time of the channel measurement result.

In an example, the transmission module is specifically configured to transmit the channel measurement result and the measurement time information to the target base station.

In an example, the processing module is specifically configured to receive the measurement time information transmitted by the terminal equipment when the serving cell is changed from the source cell belonging to the base station to the target cell.

In an example, the transmission module is specifically configured to transmit terminal context information to the target base station, the terminal context information comprising the channel measurement result.

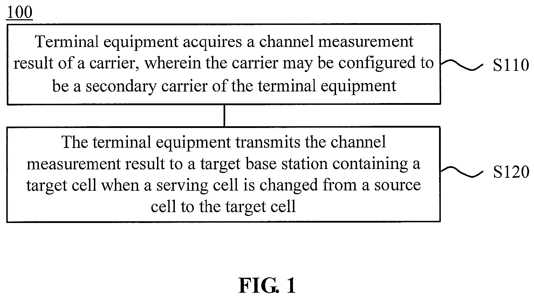

Fig. 1 is a schematic flowchart of a channel measurement and measurement result reporting method according to an embodiment of the disclosure. The method may be executed by terminal equipment, and as shown in Fig. 1, the method 100 includes the following operations.

In S110, terminal equipment acquires a channel measurement result of a carrier, wherein the carrier may be configured as a secondary carrier of the terminal equipment.

In S120, the terminal equipment transmits the channel measurement result to a target base station containing a target cell when that a serving cell is changed from a source cell to the target cell.

Therefore, in the embodiment of the disclosure, the terminal equipment in a connected state acquires the channel measurement result of the carrier which may be configured as the secondary carrier of the terminal equipment, and transmits the channel measurement result to the target base station containing the target cell when the serving cell is changed from the source cell to the target cell. In such a manner, a user experience of a terminal may be improved in case of handover or reestablishment of the terminal equipment in a wireless network supporting carrier aggregation.

It is noted that, in the embodiment of the disclosure, the source cell and the target cell may be the same cell, and may also be different cells, and the source base station and the target base station may be the same base station, and may also be different base stations, which will not be limited in the disclosure.

Optionally, in S110, the carrier may be an ordinary licensed frequency band, and may also be a license-free frequency band. The ordinary licensed frequency band refers to a frequency band which is exclusively used by a specific system or a specific operating company, and the ordinary licensed frequency band may also be called a "license frequency band" or a "licensed frequency band". The license-free frequency band refers to a frequency band free and open to the public and shared by different systems, and the license-free frequency band may also be called an "unlicensed frequency band" (for example, a 2.4GHz frequency band and a 5.8GHz frequency band). However, the scope of protection of the embodiment of the disclosure is not limited to these names.

Optionally, in S 110, the channel measurement result acquired by the terminal equipment may be obtained by performing channel measurement by the terminal equipment according to its own default configuration information, and the default configuration information may be a latest configuration automatically recorded by the terminal equipment. The channel measurement result acquired by the terminal equipment may also be obtained by performing channel measurement in an idle state according to configuration information transmitted by a base station in a Radio Resource Control (RRC) connection establishment process of the terminal equipment and the base station. The channel measurement result acquired by the terminal equipment may further be obtained by performing channel measurement according to the configuration information transmitted by the base station when the terminal equipment is in the connected state. There are no limits made in the disclosure.

In other words, the channel measurement result acquired by the terminal equipment may be a channel measurement result stored after the terminal equipment measures a channel of the carrier before cell handover or connected-state reestablishment, and may also be a channel measurement result obtained by measuring the channel of the carrier by the terminal equipment in a cell handover or connected-state reestablishment process.

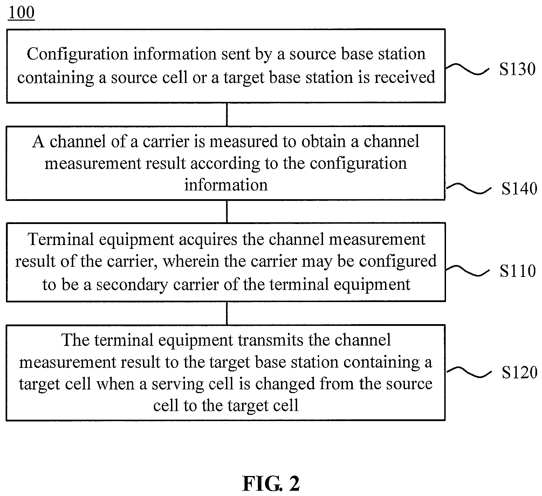

Optionally, as shown in Fig. 2, the method 100 further includes the following operations.

In S130, configuration information transmitted by a source base station containing the source cell or the target base station is received.

In S140, a channel of the carrier is measured to obtain the channel measurement result according to the configuration information.

Optionally, during cell handover of the terminal equipment, an RRC reconfiguration message transmitted by the source base station and including the configuration information or an RRC reconfiguration message transmitted by the target base station and including the configuration information may be received. Before connected-state reestablishment of the terminal equipment, the terminal equipment may receive the RRC reconfiguration message including the configuration information, transmitted by the source base station. However, the disclosure is not limited, and the terminal equipment may further receive another message including the configuration information, transmitted by the source base station or the target base station.

Optionally, in S130, the configuration information includes at least one of the following information: a carrier frequency, a measurement report triggering event, measurement parameters, a measurement period and a measurement duration.

Specifically, the terminal equipment correspondingly measures a measurement parameter in a measurement duration on a carrier frequency indicated in the configuration information according to the measurement triggering event and/or a measurement period in the configuration information, and records a measurement result. The terminal equipment may cover an original measurement result with a new measurement result after completing a measurement.

Optionally, the measurement periods indicated by the measurement period information may be the same, and may also be different. The measurement duration corresponding to each measurement or each measurement period may be the same, and may also be different. That is, each measurement period may include a variable measurement duration. For example, the measurement period may be configured according to a priority of a service or a channel load condition. If the priority of the service is higher or the load is lower, the measurement period may be set to be shorter. If the priority of the service is lower or the load is higher, the measurement period may be set to be longer. The measurement duration may also be configured according to a similar rule. If a previous measurement result condition obtained by the terminal equipment is clear, for example, an RSSI is far higher than or lower than a threshold value, the terminal equipment may use a shorter measurement duration. If the previous measurement result condition obtained by the terminal equipment is poor, that is, the channel is more complicated, for example, the RSSI is approximate to the threshold value, the measurement duration may be correspondingly extended, for example, the measurement duration may be extended in a linear or exponential form.

Optionally, the measurement parameters include at least one of the following parameters: RSRP, RSRQ and an RSSI. However, the disclosure is not limited.

In the embodiment of the disclosure, the terminal equipment may transmit measurement time information indicating a measurement time of the channel measurement result to the target base station. For example, the terminal equipment may transmit the measurement time information to the target base station at the same time of transmitting the channel measurement result to the target base station, and may also carry the measurement result and the measurement time information in different information for transmission, which is not limited in the disclosure.

Optionally, S120 may specifically be implemented as follows. The terminal equipment transmits the channel measurement result to the source base station when the serving cell is changed from the source cell to the target cell to enable the source base station to transmit the channel measurement result to the target base station.

In other words, the terminal equipment may report the channel measurement result to the source base station, and then the source base station transmits the channel measurement result to the target base station. During cell handover of the terminal equipment, the source base station may carry the channel measurement result in terminal context information for transmitting to the target base station. The source base station may also directly transmit the received channel measurement result to the target base station as independent information. During connected-state reestablishment of the terminal equipment, the source base station may store the channel measurement result as the terminal context information, and in case of successful reestablishment of the terminal equipment, transmits the terminal context information to the target base station.

Optionally, S120 may specifically be implemented as follows. The terminal equipment transmits an RRC reconfiguration completion message or an RRC handover completion message to the target base station when the serving cell is changed from the source cell to the target cell, the RRC reconfiguration completion message or the RRC handover completion message including the channel measurement result.

Furthermore, the RRC reconfiguration completion message or the RRC handover completion message may further include the measurement time information.

Alternatively, optionally, the RRC reconfiguration completion message or the RRC handover completion message may include no channel measurement result but indication information indicating that the terminal equipment stores the channel measurement result. The target base station transmits measurement result reporting indication information indicating the terminal equipment to report the measurement result to the terminal equipment after reading the indication information, and the terminal equipment transmits the channel measurement result to the target base station after receiving the measurement result reporting indication information.

Optionally, S120 may specifically be implemented as follows. The terminal equipment transmits an RRC reestablishment request message or an RRC reestablishment completion message to the target base station when the serving cell is changed from the source cell to the target cell, the RRC reestablishment request message or the RRC reestablishment completion message including the channel measurement result.

Furthermore, the RRC reestablishment request message or the RRC reestablishment completion message may further include the measurement time information.

Alternatively, optionally, the RRC reestablishment request message or the RRC reestablishment completion message may include no channel measurement result but the indication information indicating that the terminal equipment stores the channel measurement result. The target base station transmits the measurement result reporting indication information indicating the terminal equipment to report the measurement result to the terminal equipment after reading the indication information, and the terminal equipment transmits the channel measurement result to the target base station after receiving the measurement result reporting indication information.

A wireless communication method according to the embodiment of the disclosure will be described below in detail in combination with specific embodiments. It is noted that these examples are not intended to limit the scope of the embodiments of the disclosure but only to help those skilled in the art to better understand the embodiments of the disclosure.

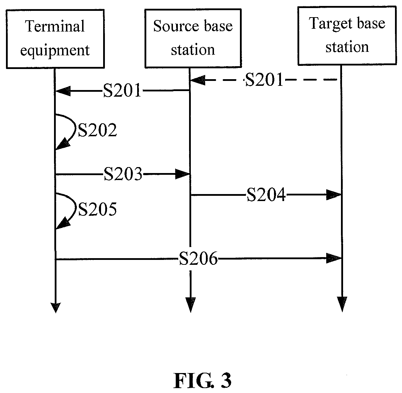

Fig. 3 is a schematic flowchart of a channel measurement and measurement result reporting method according to another embodiment of the disclosure. As shown in Fig. 3, the method 200 includes the following operations.

In S201, a source eNB or a target eNB transmits carrier measurement configuration information to UE in a connected state.

The carrier measurement configuration information may include such information as a carrier frequency, a measurement report triggering event, measurement parameters, a measurement period and a measurement duration.

In S202, the UE measures a channel of a carrier to obtain a channel measurement result according to the carrier measurement configuration information, and determines whether a reporting condition is met or not.

In S203, the UE transmits the channel measurement result to the source eNB when it is determined that the reporting condition is met.

In S204, the source eNB transmits the measurement result to the target eNB.

Specifically, in S204, the source eNB may directly forward the channel measurement result to the target eNB as independent information. The source eNB may also contain the channel measurement result in terminal context information for transmitting to the target eNB. The source eNB may further transmit information indicating a measurement time of the channel measurement result to the target eNB.

Alternatively, if the UE determines that the reporting condition is not met in S202, the following operations are executed.

In S205, the UE stores the channel measurement result.

In S206, the UE transmits to the target eNB a reconfiguration completion message (handover completion message) including the channel measurement result or indicating that the UE stores the channel measurement result.

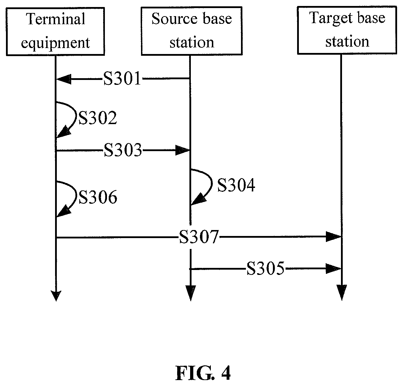

Fig. 4 is a schematic flowchart of a channel measurement and measurement result reporting method according to another embodiment of the disclosure. As shown in Fig. 4, the method 300 includes the following operations.

In S301, a source eNB transmits carrier measurement configuration information to UE in a connected state.

In S302, the UE measures a channel of a carrier to obtain a channel measurement result according to the carrier measurement configuration information, and determines whether a reporting condition is met or not.

In S303, the UE transmits the channel measurement result to the source eNB when it is determined that the reporting condition is met.

In S304, the source eNB transmits the measurement result to the target eNB.

In S305, in case of successful reestablishment of the UE, the source eNB transmits the measurement result to a target eNB.

Specifically, in S305, the source eNB may contain the channel measurement result in terminal context information for transmitting to the target eNB. The source eNB may further transmit information indicating a measurement time of the channel measurement result to the target eNB.

Alternatively, if the UE determines that the reporting condition is not met in S302, the following operations are executed.

In S306, the UE stores the channel measurement result.

In S307, the UE transmits to the target eNB a reestablishment request message or reestablishment completion message including the channel measurement result or indicating that the UE stores the channel measurement result.

It should be understood that the information included in the message in the method 300 may be the same as the information included in the related message in the method 200, which will not be elaborated herein for convenience.

Therefore, in the embodiment of the disclosure, terminal equipment in the connected state acquires a channel measurement result of a carrier which may be configured as a secondary carrier of the terminal equipment, and transmits the channel measurement result to a target base station containing a target cell when that a serving cell is changed from a source cell to the target cell. In such a manner, a user experience of a terminal may be improved in case of handover or reestablishment of the terminal equipment in a wireless network supporting carrier aggregation.

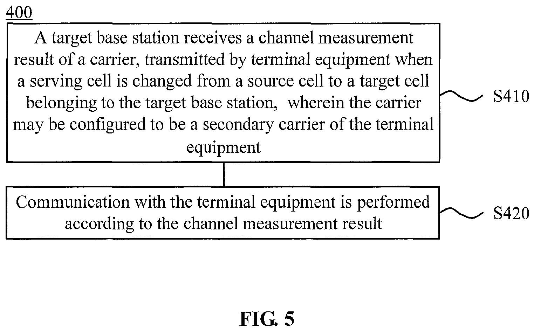

The channel measurement and measurement result reporting methods according to the embodiments of the disclosure are described above in detail from a terminal equipment side in combination with Fig. 1 to Fig. 4. The channel measurement and measurement result reporting methods according to other embodiments of the disclosure will be described below in detail from a base station side in combination with Fig. 5 to Fig. 9. It should be understood that interaction of a base station and terminal equipment, related characteristics and functions and the like described at the terminal equipment side correspond to descriptions at the base station side. For simplicity, repeated descriptions are properly eliminated.

Fig. 5 is a schematic flowchart of a channel measurement and measurement result reporting method according to another embodiment of the disclosure. The method may be executed by a base station, and as shown in Fig. 5, the method 400 includes the following operations.

In S410, a target base station receives a channel measurement result of a carrier, transmitted by terminal equipment when that a serving cell is changed from a source cell to a target cell belonging to the target base station, wherein the carrier may be configured as a secondary carrier of the terminal equipment.

In S420, communication with the terminal equipment is performed according to the channel measurement result.

Therefore, in the embodiment of the disclosure, the target base station may receive the channel measurement result of the carrier, transmitted by the terminal equipment when the serving cell is changed from the source cell to the target cell belonging to the target base station, and the carrier may be configured as the secondary carrier of the terminal equipment. In such a manner, a user experience of a terminal may be improved during handover or reestablishment of the terminal equipment in a wireless network supporting carrier aggregation.

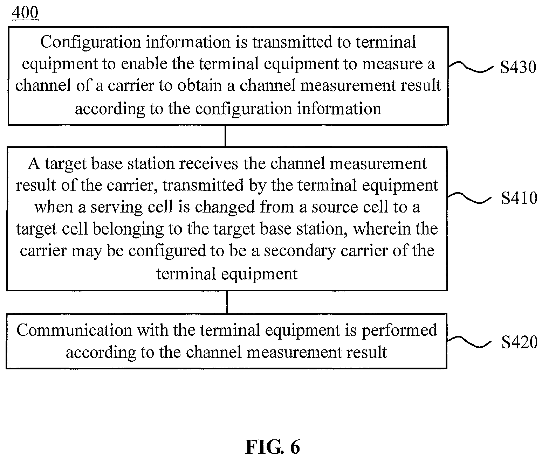

Optionally, as shown in Fig. 6, the method 400 further includes the following operation.

In S430, configuration information is transmitted to the terminal equipment to enable the terminal equipment to measure a channel of the carrier to obtain the channel measurement result according to the configuration information.

Optionally, S430 may specifically be implemented as follows. An RRC reconfiguration message is transmitted to the terminal equipment, the reconfiguration message including the configuration information.

Optionally, in S430, the configuration information includes at least one of the following information: a carrier frequency, a measurement report triggering event, measurement parameters, a measurement period and a measurement duration.

In the embodiment of the disclosure, optionally, the target base station may receive measurement time information indicating a measurement time of the channel measurement result, transmitted by the terminal equipment when the serving cell is changed from the source cell to the target cell belonging to the target base station.

Optionally, S410 is specifically implemented as follows. An RRC reconfiguration completion message or an RRC handover completion message transmitted by the terminal equipment is received. The RRC reconfiguration completion message or the RRC handover completion message includes the channel measurement result.

Optionally, S410 is specifically implemented as follows. An RRC reestablishment request message or an RRC reestablishment completion message transmitted by the terminal equipment is received. The RRC reestablishment request message or the RRC reestablishment completion message includes the channel measurement result.

Therefore, in the embodiment of the disclosure, the target base station may receive the channel measurement result of the carrier, transmitted by the terminal equipment when the serving cell is changed from the source cell to the target cell belonging to the target base station, and the carrier may be configured as the secondary carrier of the terminal equipment. In such a manner, the user experience of the terminal may be improved during handover or reestablishment of the terminal equipment in the wireless network supporting carrier aggregation.

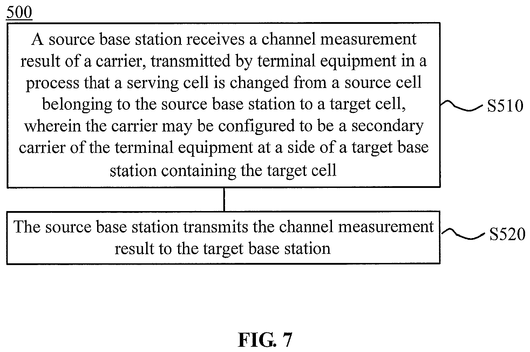

Fig. 7 is a schematic flowchart of a channel measurement and measurement result reporting method according to another embodiment of the disclosure. The method may be executed by a base station, and as shown in Fig. 7, the method 500 includes the following operations.

In S510, a source base station receives a channel measurement result of a carrier, transmitted by terminal equipment when that a serving cell is changed from a source cell belonging to the source base station to a target cell, wherein the carrier may be configured as a secondary carrier of the terminal equipment at a side of a target base station containing the target cell.

In S520, the source base station transmits the channel measurement result to the target base station.

Therefore, in the embodiment of the disclosure, the source base may receive the channel measurement result of the carrier, transmitted by the terminal equipment when the serving cell is changed from the source cell belonging to the source base station to the target cell, the carrier being configurable as the secondary carrier of the terminal equipment at the side of the target base station containing the target cell, and transmits the channel measurement result to the target base station. In such a manner, a user experience of a terminal may be improved during handover or reestablishment of the terminal equipment in a wireless network supporting carrier aggregation.

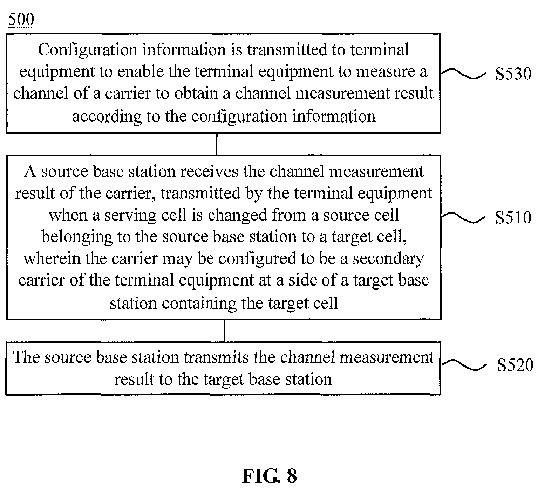

Optionally, as shown in Fig. 8, the method 500 further includes the following operation.

In S530, configuration information is transmitted to the terminal equipment to enable the terminal equipment to measure a channel of the carrier to obtain the channel measurement result according to the configuration information.

Optionally, S530 may specifically be implemented as follows. An RRC reconfiguration message is transmitted to the terminal equipment, the reconfiguration message including the configuration information.

Optionally, in S530, the configuration information includes at least one of the following information: a carrier frequency, a measurement report triggering event, measurement parameters, a measurement period and a measurement duration.

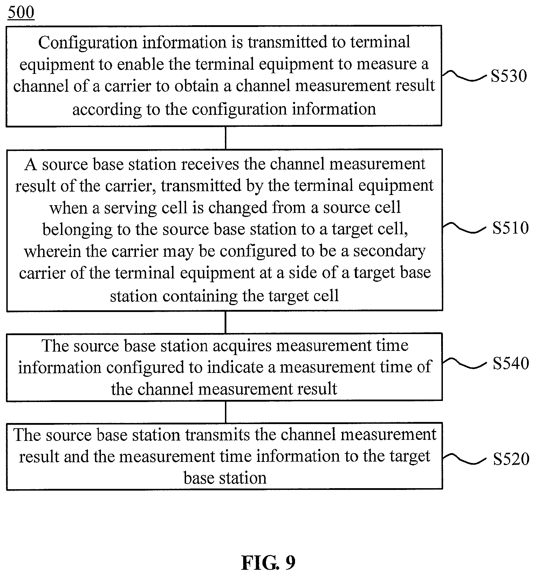

In the embodiment of the disclosure, optionally, as shown in Fig. 9, the method 500 further includes the following operation.

In S540, the source base station acquires measurement time information configured to indicate a measurement time of the channel measurement result.

Correspondingly, S520 is specifically implemented as follows. The channel measurement result and the measurement time information are transmitted to the target base station.

Optionally, in S540, the source base station may determine the measurement time information configured to indicate the measurement time of the channel measurement result according to a time when the channel measurement result transmitted by the terminal equipment is received, and may also determine the measurement time information configured to indicate the measurement time of the channel measurement result according to the received measurement time information transmitted by the terminal equipment.

Optionally, S540 is specifically implemented as follows. The measurement time information transmitted by the terminal equipment when the serving cell is changed from the source cell belonging to the source base station to the target cell is received.

Optionally, S520 is specifically implemented as follows. Terminal context information is transmitted to the target base station, the terminal context information including the channel measurement result.

Therefore, in the embodiment of the disclosure, the source base station may receive the channel measurement result, transmitted by the terminal equipment when the serving cell is changed from the source cell belonging to the source base station to the target cell, of the carrier which may be configured as the secondary carrier of the terminal equipment at the side of the target base station containing the target cell, and transmits the channel measurement result to the target base station. In such a manner, the user experience of the terminal may be improved during handover or reestablishment of the terminal equipment in the wireless network supporting carrier aggregation.

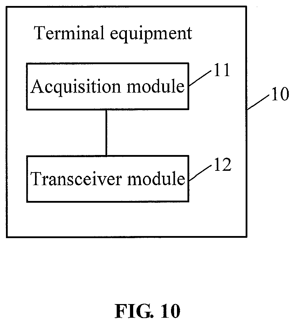

Terminal equipment of the embodiment of the disclosure will be described below in detail in combination with Fig. 10. As shown in Fig. 10, the terminal equipment 10 includes an acquisition module 11 and a transceiver module 12.

The acquisition module 11 is configured for the terminal equipment to acquire a channel measurement result of a carrier, wherein the carrier may be configured as a secondary carrier of the terminal equipment.

The transceiver module 12 is configured to transmit the channel measurement result to a target base station containing a target cell when that a serving cell is changed from a source cell to the target cell.

Therefore, in the embodiment of the disclosure, the terminal equipment in a connected state acquires the channel measurement result of the carrier which may be configured as the secondary carrier of the terminal equipment, and transmits the channel measurement result to the target base station containing the target cell when the serving cell is changed from the source cell to the target cell. In such a manner, a user experience of a terminal may be improved in case of handover or reestablishment of the terminal equipment in a wireless network supporting carrier aggregation.

In the embodiment of the disclosure, optionally, the acquisition module 11 is further configured to control the transceiver module 12 to receive configuration information transmitted by a source base station containing the source cell or the target base station, and measure a channel of the carrier to obtain the channel measurement result according to the configuration information.

In the embodiment of the disclosure, optionally, the acquisition module 11 is specifically configured to control the transceiver module to receive an RRC reconfiguration message transmitted by the source base station or the target base station, the RRC reconfiguration message including the configuration information, and measure the channel of the carrier to obtain the channel measurement result according to the configuration information.

In the embodiment of the disclosure, optionally, the configuration information includes at least one of the following information: a carrier frequency, a measurement report triggering event, measurement parameters, a measurement period and a measurement duration.

In the embodiment of the disclosure, optionally, the transceiver module 12 may further configured to transmit measurement time information indicating a measurement time of the channel measurement result to the target base station when the serving cell is changed from the source cell to the target cell.

In the embodiment of the disclosure, optionally, the transceiver module 12 is specifically configured to transmit the channel measurement result to the source base station to enable the source base station to transmit the channel measurement result to the target base station.

In the embodiment of the disclosure, optionally, the transceiver module 12 is specifically configured to transmit an RRC reconfiguration completion message or an RRC handover completion message to the target base station, the RRC reconfiguration completion message or the RRC handover completion message including the channel measurement result.

In the embodiment of the disclosure, optionally, the transceiver module 12 is specifically configured to transmit an RRC reestablishment request message or an RRC reestablishment completion message to the target base station, the RRC reestablishment request message or the RRC reestablishment completion message including the channel measurement result.

Therefore, in the embodiment of the disclosure, the terminal equipment in the connected state acquires the channel measurement result of the carrier which may be configured as the secondary carrier of the terminal equipment, and transmits the channel measurement result to the target base station containing the target cell when the serving cell is changed from the source cell to the target cell. In such a manner, the user experience of the terminal may be improved in case of handover or reestablishment of the terminal equipment in the wireless network supporting carrier aggregation.

It should be understood that the terminal equipment 10 according to the embodiment of the disclosure may correspondingly execute the method 100 for establishing a block acknowledgement communication mechanism in the embodiment of the disclosure, and the abovementioned and other operations and/or functions of each module in the terminal equipment 10 are intended to implement the corresponding flows of each method in Fig. 1 and Fig. 2 respectively, which will not be elaborated herein for simplicity.

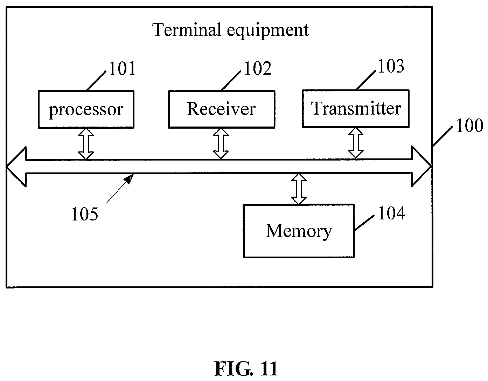

It is noted that, in the embodiment of the disclosure, the acquisition module 11 may be implemented by a processor, and the transceiver module 12 may be implemented by a receiver and a transmitter. As shown in Fig. 11, terminal equipment 100 may include a processor 101, a receiver 102, a transmitter 103 and a memory 104, wherein the memory 104 may be configured to store codes executed by the processor 101 and the like.

Respective components in the terminal equipment 100 are coupled together through a bus system 105, wherein the bus system 105 includes a data bus, and further includes a power bus, a control bus and a state signal bus.

It should be understood that the terminal equipment 100 according to the embodiment of the disclosure may correspond to the terminal equipment 10 in the embodiment of the disclosure, and may correspond to a corresponding body in the method according to the embodiment of the disclosure, and the abovementioned and other operations and/or functions of each module in the terminal equipment 100 are intended to implement the corresponding flows of each method in Fig. 1 and Fig. 2 respectively, which will not be elaborated herein for simplicity.

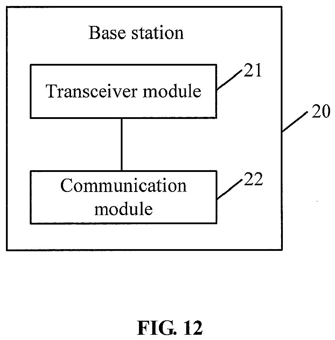

A base station of the embodiment of the disclosure will be described below in detail in combination with Fig. 12. As shown in Fig. 12, the base station 20 includes a transceiver module 21 and a communication module 22.

The transceiver module 21 is configured to receive a channel measurement result of a carrier, transmitted by terminal equipment when that a serving cell is changed from a source cell to a target cell belonging to the base station, wherein the carrier may be configured as a secondary carrier of the terminal equipment.

The communication module 22 is configured to communicate with the terminal equipment according to the channel measurement result.

Therefore, in the embodiment of the disclosure, the base station may receive the channel measurement result, transmitted by the terminal equipment when the serving cell is changed from the source cell to the target cell belonging to the base station, of the carrier which may be configured as the secondary carrier of the terminal equipment. In such a manner, a user experience of a terminal may be improved during handover or reestablishment of the terminal equipment in a wireless network supporting carrier aggregation.

In the embodiment of the disclosure, optionally, the transceiver module 21 is further configured to transmit configuration information to the terminal equipment to enable the terminal equipment to measure a channel of the carrier to obtain the channel measurement result according to the configuration information.

In the embodiment of the disclosure, optionally, the transceiver module 21 is specifically configured to transmit an RRC reconfiguration message to the terminal equipment, the RRC reconfiguration message including the configuration information.

In the embodiment of the disclosure, optionally, the configuration information includes at least one of the following information: a carrier frequency, a measurement report triggering event, measurement parameters, a measurement period and a measurement duration.

In the embodiment of the disclosure, optionally, the transceiver module 21 is specifically configured to receive measurement time information indicating a measurement time of the channel measurement result, transmitted by the terminal equipment when the serving cell is changed from the source cell to the target cell belonging to the base station.

In the embodiment of the disclosure, optionally, the transceiver module 21 is specifically configured to receive an RRC reconfiguration completion message or RRC handover completion message transmitted by the terminal equipment, the RRC reconfiguration completion message or the RRC handover completion message including the channel measurement result.

In the embodiment of the disclosure, optionally, the transceiver module 21 is specifically configured to receive an RRC reestablishment request message or RRC reestablishment completion message transmitted by the terminal equipment, the RRC reestablishment request message or the RRC reestablishment completion message including the channel measurement result.

Therefore, in the embodiment of the disclosure, the base station may receive the channel measurement result, transmitted by the terminal equipment when the serving cell is changed from the source cell to the target cell belonging to the base station, of the carrier which may be configured as the secondary carrier of the terminal equipment. In such a manner, the user experience of the terminal may be improved during handover or reestablishment of the terminal equipment in the wireless network supporting carrier aggregation.

It should be understood that the base station 20 according to the embodiment of the disclosure may correspondingly execute the channel measurement and measurement result reporting method 400in the embodiment of the disclosure, and the abovementioned and other operations and/or functions of each module in the base station 20 are intended to implement the corresponding flows of each method in Fig. 5 and Fig. 6 respectively, which will not be elaborated herein for simplicity.

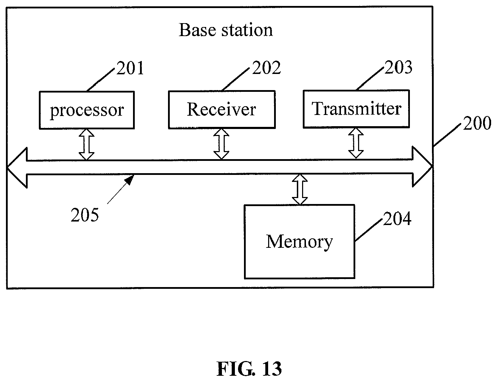

It is noted that, in the embodiment of the disclosure, the transceiver module 21 may be implemented by a receiver and a transmitter. The communication module 22 may be implemented by a processor. As shown in Fig. 13, a base station 200 may include a processor 201, a receiver 202, a transmitter 203 and a memory 204, wherein the memory 204 may be configured to store codes executed by the processor 201 and the like.

Respective components in the base station 200 are coupled together through a bus system 205, wherein the bus system 205 includes a data bus, and further includes a power bus, a control bus and a state signal bus.

It should be understood that the base station 200 according to the embodiment of the disclosure may correspond to the base station 20 in the embodiment of the disclosure, and may correspond to a corresponding body in the method according to the embodiment of the disclosure, and the abovementioned and other operations and/or functions of each module in the base station 200 are intended to implement the corresponding flows of each method in Fig. 5 and Fig. 6 respectively, which will not be elaborated herein for simplicity.

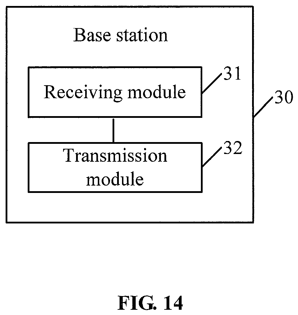

Abase station of the embodiment of the disclosure will be described below in detail in combination with Fig. 14. As shown in Fig. 14, the base station 30 includes a receiving module 31, configured to receive a channel measurement result of a carrier, transmitted by terminal equipment when that a serving cell is changed from a source cell belonging to the base station to a target cell, wherein the carrier may be configured as a secondary carrier of the terminal equipment at a side of a target base station containing the target cell; and a transmission module 32, configured to transmit the channel measurement result to the target base station.

Therefore, in the embodiment of the disclosure, the base station receives the channel measurement result, transmitted by the terminal equipment when the serving cell is changed from the source cell belonging to the base station to the target cell, of the carrier which may be configured as the secondary carrier of the terminal equipment at the side of the target base station containing the target cell, and transmits the channel measurement result to the target base station. In such a manner, a user experience of a terminal may be improved during handover or reestablishment of the terminal equipment in a wireless network supporting carrier aggregation.

In the embodiment of the disclosure, optionally, the transmission module 32 is further configured to transmit configuration information to the terminal equipment to enable the terminal equipment to measure a channel of the carrier to obtain the channel measurement result according to the configuration information.

In the embodiment of the disclosure, optionally, the transmission module 32 is specifically configured to transmit an RRC reconfiguration message to the terminal equipment, the RRC reconfiguration message including the configuration information.

In the embodiment of the disclosure, optionally, the configuration information includes at least one of the following information: a carrier frequency, a measurement report triggering event, measurement parameters, a measurement period and a measurement duration.

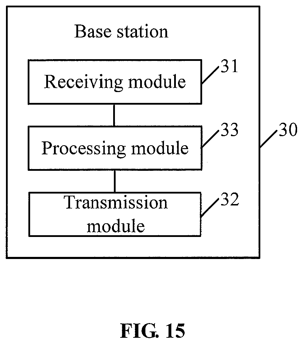

In the embodiment of the disclosure, optionally, as shown in Fig. 15, the base station 30 further include a processing module 33, configured to acquire measurement time information configured to indicate a measurement time of the channel measurement result. The transmission module 32 is specifically configured to transmit the channel measurement result and the measurement time information to the target base station.

In the embodiment of the disclosure, optionally, the processing module 33 is specifically configured to control the transceiver module 31 to receive the measurement time information transmitted by the terminal equipment when the serving cell is changed from the source cell belonging to the base station to the target cell.

In the embodiment of the disclosure, optionally, the transmission module 32 is specifically configured to transmit terminal context information to the target base station, the terminal context information including the channel measurement result.

Therefore, in the embodiment of the disclosure, the base station receives the channel measurement result, transmitted by the terminal equipment when the serving cell is changed from the source cell belonging to the base station to the target cell, of the carrier which may be configured as the secondary carrier of the terminal equipment at the side of the target base station containing the target cell, and transmits the channel measurement result to the target base station. In such a manner, the user experience of the terminal may be improved during handover or reestablishment of the terminal equipment in the wireless network supporting carrier aggregation.

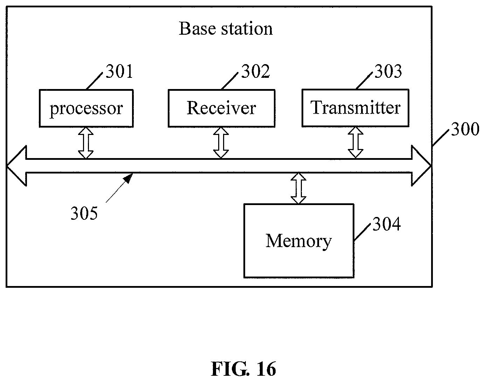

It is noted that, in the embodiment of the disclosure, the receiving module 31 may be implemented by a receiver, the transmission module 32 may be implemented by a transmitter, and the processing module 33 may be implemented by a processor. As shown in Fig. 16, a base station 300 may include a processor 301, a receiver 302, a transmitter 303 and a memory 304, wherein the memory 304 may be configured to store codes executed by the processor 301 and the like.

Respective components in the base station 300 are coupled together through a bus system 305, wherein the bus system 305 includes a data bus, and further includes a power bus, a control bus and a state signal bus.

It should be understood that the base station 300 according to the embodiment of the disclosure may correspond to the base station 30 in the embodiment of the disclosure, and may correspond to a corresponding body in the method according to the embodiment of the disclosure, and the abovementioned and other operations and/or functions of each module in the base station 300 are intended to implement the corresponding flows of each method in Fig. 7 to Fig. 9 respectively, which will not be elaborated herein for simplicity.

It should be understood that "one embodiment" or "an embodiment" mentioned in the whole specification means that specific characteristics, structures or properties related to the embodiment are included in at least one embodiment of the disclosure. Therefore, "in one embodiment" or "in an embodiment" appearing at each place of the whole specification may not always refer to the same embodiment. In addition, these specific characteristics, structures or properties may be combined in one or more embodiments in any proper manner.

It should be understood that, in each embodiment of the disclosure, reference number of each process does not mean an execution order. The execution order of each process should be determined according to its function and an internal logic, and an implementation process of the embodiment of the disclosure should not be limited.

In addition, the terms "system" and "network" in the disclosure may usually be exchanged for use in the disclosure. It should be understood that the term "and/or" in the disclosure only describes an association relationship of associated objects, and represents that there may exist three relationships. For example, A and/or B may represent the following three conditions: A exists independently, both A and B exist, and B exists independently. Moreover, the character "/" in the disclosure usually represents that associated previous and latter objects form an "or" relationship.

It should be understood that, in the embodiments provided by the disclosure, "B corresponding to A" represents that B is associated with A and B may be determined according to A. However, it should also be understood that determining B according to A does not means that B is determined only according to A, and B may also be determined according to A and/or other information.

Those skilled in the art may realize that the units and algorithm steps of each example described in combination with the embodiments disclosed in the disclosure may be implemented by electronic hardware, computer software or a combination thereof. For clearly describing interchangeability of hardware and software, the constitutions and steps of each example have been generally described in the above descriptions according to functions. Whether these functions are executed in a hardware or software manner depends on specific applications and design constraints of the technical solutions. Those skilled in the art may realize the described functions for each specific application by different methods, but such realization shall fall within the scope of the disclosure.

Those skilled in the art may clearly learn about that the specific working processes of the system, device and unit described above may refer to the corresponding processes in the method embodiment for convenient and brief description, which will not be elaborated herein.

In some embodiments provided by the disclosure, it should be understood that the disclosed system, device and method may be implemented in another manner. The device embodiment described above is only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each function unit in each embodiment of the disclosure may be integrated into a processing unit, each unit may also exist independently, and two or more than two unit may also be integrated into a unit.

When being implemented in form of software function unit and sold or used as an independent product, the integrated unit may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a piece of computer equipment (which may be a personal computer, a server, network equipment or the like) to execute all or part of the steps of the method in each embodiment of the disclosure. The abovementioned storage medium includes: various media capable of storing program codes such as a U disk, a mobile hard disk, a Read-Only Memory (ROM), a Random Access Memory (RAM), a magnetic disk or an optical disk.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A channel measurement and measurement result reporting method performed by a terminal equipment, the method comprising:
receiving (S130) configuration information from a source base station containing a source cell or from a target base station, wherein the configuration information comprises: measurement parameters, a measurement period and a measurement duration, the measurement parameters comprising a Received Signal Strength Indicator, RSSI;
measuring (S140) a channel of a carrier according to the configuration information;
acquiring (S1 10) a channel measurement result of the carrier according to the configuration information, the carrier being configurable as a secondary carrier of the terminal equipment; and
transmitting (S120) the channel measurement result to the target base station containing a target cell when a serving cell is changed from the source cell to the target cell,
wherein measuring (S140) the channel of the carrier to obtain the channel measurement result of the carrier according to the configuration information comprises:
measuring a measurement parameter in a measurement duration on a carrier frequency indicated in the configuration information according to the measurement period in the configuration information, and recording a measurement result, wherein the measurement duration is configured according to a comparison result of a previous RSSI measurement result with respect to a threshold value.

2. The method according to claim 1,
wherein the configuration information further comprises at least one of the following information: a carrier frequency or a measurement report triggering event.

3. The method according to any one of claims 1-2, further comprising:
transmitting measurement time information indicating a measurement time of the channel measurement result to the target base station when the serving cell is changed from the source cell to the target cell.

4. The method according to any one of claims 1-3, wherein transmitting (S120) the channel measurement result to the target base station comprises:
transmitting the channel measurement result to the source base station for being forwarded to the target base station.

5. The method according to any one of claims 1-3, wherein transmitting (S120) the channel measurement result to the target base station comprises:
transmitting an RRC reconfiguration completion message or an RRC handover completion message to the target base station, the RRC reconfiguration completion message or the RRC handover completion message comprising the channel measurement result.

6. The method according to any one of claims 1-3, wherein transmitting (S120) the channel measurement result to the target base station comprises:
transmitting an RRC reestablishment request message or an RRC reestablishment completion message to the target base station, the RRC reestablishment request message or the RRC reestablishment completion message comprising the channel measurement result.

7. A channel measurement and measurement result reporting method performed by a target base station, the method comprising:
receiving (S410) a channel measurement result of a carrier from a terminal equipment when a serving cell is changed from a source cell to a target cell belonging to the target base station, the carrier being configurable as a secondary carrier of the terminal equipment; and
performing (S420) communication with the terminal equipment according to the channel measurement result; and
transmitting (S430) configuration information to the terminal equipment to enable the terminal equipment to measure a channel of the carrier according to the configuration information, wherein the configuration information comprises: measurement parameters, a measurement period and a measurement duration, the measurement parameters comprising a Received Signal Strength Indicator, RSSI, wherein the measurement duration is configured according to a comparison result of a previous RSSI measurement result with respect to a threshold value.

8. The method according to claim 7, further comprising:
receiving measurement time information indicating a measurement time of the channel measurement result from the terminal equipment.

9. The method according to any one of claims 7-8, wherein receiving (S410) the channel measurement result of the carrier from the terminal equipment when the serving cell is changed from the source cell to the target cell comprises:
receiving an RRC reconfiguration completion message or RRC handover completion message from the terminal equipment, the RRC reconfiguration completion message or the RRC handover completion message comprising the channel measurement result.

10. The method according to any one of claims 7-8, wherein receiving (S410) the channel measurement result of the carrier from the terminal equipment when the serving cell is changed from the source cell to the target cell comprises:
receiving an RRC reestablishment request message or RRC reestablishment completion message transmitted by the terminal equipment, the RRC reestablishment request message or the RRC reestablishment completion message comprising the channel measurement result.

11. A channel measurement and measurement result reporting method performed by a source base station, the method comprising:
receiving (S510) a channel measurement result of a carrier from a terminal equipment when a serving cell is changed from a source cell belonging to the source base station to a target cell, the carrier being configurable as a secondary carrier of the terminal equipment at a side of a target base station containing the target cell;
transmitting (S520) the channel measurement result to the target base station; and
transmitting (S530) configuration information to the terminal equipment to enable the terminal equipment to measure a channel of the carrier according to the configuration information, wherein the configuration information comprises: measurement parameters, a measurement period and a measurement duration, the measurement parameters comprising a Received Signal Strength Indicator, RSSI, wherein the measurement duration is configured according to a comparison result of a previous RSSI measurement result with respect to a threshold value.

12. The method according to claim 11, further comprising:
acquiring (S540) measurement time information configured to indicate a measurement time of the channel measurement result,
wherein transmitting (S520) the channel measurement result to the target base station comprises:
transmitting the channel measurement result and the measurement time information to the target base station,
wherein acquiring (S540) the measurement time information configured to indicate the measurement time of the channel measurement result comprises:
receiving the measurement time information from the terminal equipment when the serving cell is changed from the source cell to the target cell.

13. The method according to any one of claims 11-12, wherein transmitting (S520) the channel measurement result to the target base station comprises:
transmitting terminal context information to the target base station, the terminal context information comprising the channel measurement result.

14. Terminal equipment comprising means adapted to perform the method of any one of claims 1 to 6

## Patentansprüche

1. Kanalmessungs- und Messergebnisberichtsverfahren, das von einem Endgerät durchgeführt wird, wobei das Verfahren umfasst:
Empfangen (S130) von Konfigurationsinformationen von einer Quellbasisstation, die eine Quellzelle enthält, oder von einer Zielbasisstation, wobei die Konfigurationsinformationen umfassen: Messparameter, eine Messperiode und eine Messdauer, wobei die Messparameter einen Empfangssignalstärkeindikator, RSSI, umfassen;
Messen (S140) eines Kanals eines Trägers gemäß den Konfigurationsinformationen;
Erfassen (S110) eines Kanalmessergebnisses des Trägers gemäß den Konfigurationsinformationen, wobei der Träger als ein sekundärer Träger des Endgeräts konfigurierbar ist; und
Senden (S120) des Kanalmessergebnisses an die Zielbasisstation, die eine Zielzelle enthält, wenn eine bedienende Zelle von der Quellzelle auf die Zielzelle geändert wird;
wobei das Messen (S140) des Kanals des Trägers, um das Kanalmessergebnis des Trägers zu erhalten, gemäß den Konfigurationsinformationen, umfasst:
Messen eines Messparameters in einer Messdauer auf einer Trägerfrequenz, die in den Konfigurationsinformationen angegeben ist, gemäß der Messperiode in den Konfigurationsinformationen, und Aufzeichnen eines Messergebnisses, wobei die Messdauer gemäß einem Vergleichsergebnis eines vorherigen RSSI-Messergebnisses in Bezug auf einen Schwellenwert konfiguriert wird.

2. Verfahren nach Anspruch 1,
wobei die Konfigurationsinformationen ferner mindestens eine der folgenden Informationen umfassen: eine Trägerfrequenz oder ein Messberichts-Auslöseereignis.

3. Verfahren nach einem der Ansprüche 1 bis 2, ferner umfassend:
Senden von Messzeitinformationen, die eine Messzeit des Kanalmessergebnisses angeben, an die Zielbasisstation, wenn die bedienende Zelle von der Quellzelle auf die Zielzelle geändert wird.

4. Verfahren nach einem der Ansprüche 1 bis 3, wobei das Senden (S120) des Kanalmessergebnisses an die Zielbasisstation umfasst:
Senden des Kanalmessergebnisses an die Quellbasisstation zur Weiterleitung an die Zielbasisstation.

5. Verfahren nach einem der Ansprüche 1 bis 3, wobei das Senden (S120) des Kanalmessergebnisses an die Zielbasisstation umfasst:
Senden einer RRC-Rekonfigurations-Abschlussnachricht oder einer RRC-Handover-Abschlussnachricht an die Zielbasisstation, wobei die RRC-Rekonfigurations-Abschlussnachricht oder die RRC-Handover-Abschlussnachricht das Kanalmessergebnis umfasst.

6. Verfahren nach einem der Ansprüche 1 bis 3, wobei das Senden (S120) des Kanalmessergebnisses an die Zielbasisstation umfasst:
Senden einer RRC-Wiederherstellungs-Anforderungsnachricht oder einer RRC-Wiederherstellungs-Abschlussnachricht an die Zielbasisstation, wobei die RRC-Wiederherstellungs-Anforderungsnachricht oder die RRC-Wiederherstellungs-Abschlussnachricht das Kanalmessergebnis umfasst.

7. Kanalmessungs- und Messergebnisberichtsverfahren, das von einer Zielbasisstation durchgeführt wird, wobei das Verfahren umfasst:
Empfangen (S410) eines Kanalmessergebnisses eines Trägers von einem Endgerät, wenn eine bedienende Zelle von einer Quellzelle auf eine Zielzelle, die zu der Zielbasisstation gehört, geändert wird, wobei der Träger als sekundärer Träger des Endgeräts konfigurierbar ist; und
Durchführen (S420) einer Kommunikation mit dem Endgerät gemäß dem Kanalmessergebnis; und
Senden (S430) von Konfigurationsinformationen an das Endgerät, um dem Endgerät zu ermöglichen, einen Kanal des Trägers gemäß den Konfigurationsinformationen zu messen, wobei die Konfigurationsinformationen umfassen: Messparameter, eine Messperiode und eine Messdauer, wobei die Messparameter einen Empfangssignalstärkeindiktor, RSSI, umfassen, wobei die Messdauer gemäß einem Vergleichsergebnis eines vorherigen RSSI-Messergebnisses in Bezug auf einen Schwellenwert konfiguriert wird.

8. Verfahren nach Anspruch 7, ferner umfassend:
Empfangen von Messzeitinformationen, die eine Messzeit des Kanalmessergebnisses von dem Endgerät angeben.

9. Verfahren nach einem der Ansprüche 7 bis 8, wobei das Empfangen (S410) des Kanalmessergebnisses des Trägers von dem Endgerät, wenn die bedienende Zelle von der Quellzelle auf die Zielzelle geändert wird, umfasst:
Empfangen einer RRC-Rekonfigurations-Abschlussnachricht oder einer RRC-Handover-Abschlussnachricht von dem Endgerät, wobei die RRC-Rekonfigurations-Abschlussnachricht oder die RRC-Handover-Abschlussnachricht das Kanalmessergebnis umfasst.

10. Verfahren nach einem der Ansprüche 7 bis 8, wobei das Empfangen (S410) des Kanalmessergebnisses des Trägers von dem Endgerät, wenn die bedienende Zelle von der Quellzelle auf die Zielzelle geändert wird, umfasst:
Empfangen einer RRC-Wiederherstellungs-Anforderungsnachricht oder einer RRC-WiederherstellungsAbschlussnachricht, die von dem Endgerät gesendet wurde, wobei die RRC-Wiederherstellungsanforderungsnachricht oder die RRC-Wiederherstellungsabschlussnachricht das Kanalmessergebnis umfasst.

11. Kanalmessungs- und Messergebnisberichtsverfahren, das von einer Quellenbasisstation durchgeführt wird, wobei das Verfahren umfasst:
Empfangen (S510) eines Kanalmessergebnisses eines Trägers von einem Endgerät, wenn eine bedienende Zelle von einer Quellzelle, die zu der Quellbasisstation gehört, auf eine Zielzelle geändert wird, wobei der Träger als sekundärer Träger des Endgeräts an einer Seite einer Zielbasisstation, die die Zielzelle enthält, konfigurierbar ist;
Senden (S520) des Kanalmessergebnisses an die Zielbasisstation; und
Senden (S530) von Konfigurationsinformationen an das Endgerät, um dem Endgerät zu ermöglichen, einen Kanal des Trägers gemäß den Konfigurationsinformationen zu messen, wobei die Konfigurationsinformationen umfassen: Messparameter, eine Messperiode und eine Messdauer, wobei die Messparameter einen Empfangssignalstärkeindikator, RSSI, umfassen, wobei die Messdauer gemäß einem Vergleichsergebnis eines vorherigen RSSI-Messergebnisses in Bezug auf einen Schwellenwert konfiguriert wird.

12. Verfahren nach Anspruch 11, ferner umfassend:
Erfassen (S540) von Messzeitinformationen, die dazu konfiguriert sind, eine Messzeit des Kanalmessergebnisses anzugeben,
wobei das Senden (S520) des Kanalmessergebnisses an die Zielbasisstation umfasst:
Senden des Kanalmessergebnisses und der Messzeitinformationen an die Zielbasisstation,
wobei das Erfassen (S540) der Messzeitinformationen, die dazu konfiguriert sind, die Messzeit des Kanalmessergebnisses anzugeben, umfasst:
Empfangen der Messzeitinformationen von dem Endgerät, wenn die bedienende Zelle von der Quellzelle auf die Zielzelle geändert wird.

13. Verfahren nach einem der Ansprüche 11 bis 12, wobei das Senden (S520) des Kanalmessergebnisses an die Zielbasisstation umfasst:
Senden von Endgerätkontextinformationen an die Zielbasisstation, wobei die Endgerätkontextinformationen das Kanalmessergebnis umfassen.

14. Endgerät, das Mittel umfasst, die zur Durchführung des Verfahrens nach einem der Ansprüche 1 bis 6 geeignet sind.

## Revendications

1. Procédé de mesurage de canal et de création de rapport de résultat de mesurage mis en œuvre par un équipement terminal, le procédé comprenant :
la réception (S130) d'informations de configuration en provenance d'une station de base source contenant une cellule source ou en provenance d'une station de base cible, dans lequel les informations de configuration comprennent : des paramètres de mesurage, une période de mesurage et une durée de mesurage, les paramètres de mesurage comprenant un Indicateur d'Intensité de Signal Reçu, RSSI ;
la mesure (S140) d'un canal d'une porteuse conformément aux informations de configuration ;
l'acquisition (S110) d'un résultat de mesurage de canal de la porteuse conformément aux informations de configuration, la porteuse étant configurable en tant que porteuse secondaire de l'équipement terminal ; et
la transmission (S120) du résultat de mesurage de canal à la station de base cible contenant une cellule cible lorsqu'une cellule de desserte est amenée à passer de la cellule source à la cellule cible,
dans lequel la mesure (S140) du canal de la porteuse pour obtenir le résultat de mesurage de canal de la porteuse conformément aux informations de configuration comprend : la mesure d'un paramètre de mesurage pendant une durée de mesurage sur une fréquence porteuse indiquée dans les informations de configuration conformément à la période de mesurage contenue dans les informations de configuration, et l'enregistrement d'un résultat de mesurage, dans lequel la durée du mesurage est configurée conformément à un résultat de comparaison d'un résultat de mesurage RSSI précédent par rapport à une valeur de seuil.

2. Procédé selon la revendication 1,
dans lequel les informations de configuration comprennent en outre au moins l'une des informations suivantes : une fréquence porteuse ou un événement de déclenchement de rapport de mesure.

3. Procédé selon l'une quelconque des revendications 1-2, comprenant en outre :
la transmission d'informations de temps de mesurage indiquant un temps de mesurage du résultat de mesurage de canal à la station de base cible lorsque la cellule de desserte est amenée à passer de la cellule source à la cellule cible.

4. Procédé selon l'une quelconque des revendications 1-3,
dans lequel la transmission (S120) du résultat de mesurage de canal à la station de base cible comprend : la transmission du résultat de mesurage de canal à la station de base source afin qu'il soit transféré à la station de base cible.

5. Procédé selon l'une quelconque des revendications 1-3,
dans lequel la transmission (S120) du résultat de mesurage de canal à la station de base cible comprend : la transmission d'un message d'achèvement de reconfiguration RRC ou d'un message d'achèvement de transfert intercellulaire RRC à la station de base cible, le message d'achèvement de reconfiguration RRC ou le message d'achèvement de transfert intercellulaire RRC comprenant le résultat de mesurage de canal.

6. Procédé selon l'une quelconque des revendications 1-3,
dans lequel la transmission (S120) du résultat de mesurage de canal à la station de base cible comprend : la transmission d'un message de demande de rétablissement RRC ou d'un message d'achèvement de rétablissement RRC à la station de base cible, le message de demande de rétablissement RRC ou le message d'achèvement de rétablissement RRC comprenant le résultat de mesurage de canal.

7. Procédé de mesurage de canal et de création de rapport de résultat de mesurage mis en œuvre par une station de base cible, le procédé comprenant :
la réception (S410) d'un résultat de mesurage de canal d'une porteuse en provenance d'un équipement terminal lorsqu'une cellule de desserte est amenée à passer d'une cellule source à une cellule cible appartenant à la station de base cible, la porteuse étant configurable en tant que porteuse secondaire de l'équipement terminal ; et
la réalisation (S420) d'une communication avec l'équipement terminal conformément au résultat de mesurage de canal ; et
la transmission (S430) d'informations de configuration à l'équipement terminal pour permettre à l'équipement terminal de mesurer un canal de la porteuse conformément aux informations de configuration, dans lequel les informations de configuration comprennent : des paramètres de mesurage, une période de mesurage et une durée de mesurage, les paramètres de mesurage comprenant un Indicateur d'Intensité de Signal Reçu, RSSI, dans lequel la durée de mesurage est configurée conformément à un résultat de comparaison d'un résultat de mesurage RSSI précédent par rapport à une valeur de seuil.

8. Procédé selon la revendication 7, comprenant en outre :
la réception d'informations de temps de mesurage indiquant un temps de mesurage du résultat de mesurage de canal en provenance de l'équipement terminal.

9. Procédé selon l'une quelconque des revendications 7-8, dans lequel la réception (S410) du résultat de mesurage de canal de la porteuse en provenance de l'équipement terminal lorsque la cellule de desserte est amenée à passer de la cellule source à la cellule cible comprend :
la réception d'un message d'achèvement de reconfiguration RRC ou d'un message d'achèvement de transfert intercellulaire RRC en provenance de l'équipement terminal, le message d'achèvement de reconfiguration RRC ou le message d'achèvement de transfert intercellulaire RRC comprenant le résultat de mesurage de canal.

10. Procédé selon l'une quelconque des revendications 7-8, dans lequel la réception (S410) du résultat de mesurage de canal de la porteuse en provenance de l'équipement terminal lorsque la cellule de desserte est amenée à passer de la cellule source à la cellule cible comprend :
la réception d'un message de demande de rétablissement RRC ou d'un message d'achèvement de rétablissement RRC transmis par l'équipement terminal, le message de demande de rétablissement RRC ou le message d'achèvement de rétablissement RRC comprenant le résultat de mesurage de canal.

11. Procédé de mesurage de canal et de création de rapport de résultat de mesurage mis en œuvre par une station de base source, le procédé comprenant :
la réception (S510) d'un résultat de mesurage de canal d'une porteuse en provenance d'un équipement terminal lorsque la cellule de desserte est amenée à passer d'une cellule source appartenant à la station de base source à une cellule cible, la porteuse étant configurable en tant que porteuse secondaire de l'équipement terminal sur un côté d'une station de base cible contenant la cellule cible ;
la transmission (S520) du résultat de mesurage de canal à la station de base cible ; et
la transmission (S530) d'informations de configuration à l'équipement terminal pour permettre à l'équipement terminal de mesurer un canal de la porteuse conformément aux informations de configuration, dans lequel les informations de configuration comprennent : des paramètres de mesurage, une période de mesurage et une durée de mesurage, les paramètres de mesurage comprenant un Indicateur d'Intensité de Signal Reçu, RSSI, dans lequel la durée de mesurage est configurée conformément à un résultat de comparaison d'un résultat de mesurage RSSI précédent par rapport à une valeur de seuil.

12. Procédé selon la revendication 11, comprenant en outre :
l'acquisition (S540) d'informations de temps de mesurage configurées pour indiquer un temps de mesurage du résultat de mesurage de canal,
dans lequel la transmission (S520) du résultat de mesurage de canal à la station de base cible comprend :
la transmission du résultat de mesurage de canal et des informations de temps de mesurage à la station de base cible,
dans lequel l'acquisition (S540) des informations de temps de mesurage configurées pour indiquer le temps de mesurage du résultat de mesurage de canal comprend :
la réception des informations de temps de mesurage en provenance de l'équipement terminal lorsque la cellule de desserte est amenée à passer de la cellule source à la cellule cible.

13. Procédé selon l'une quelconque des revendications 11-12, dans lequel la transmission (S520) du résultat de mesurage de canal à la station de base cible comprend : la transmission d'informations de contexte de terminal à la station de base cible, les informations de contexte de terminal comprenant le résultat de mesurage de canal.

14. Équipement terminal comprenant des moyens conçus pour mettre en œuvre le procédé selon l'une quelconque des revendications 1 à 6.
